# EUROPÄISCHE PATENTSCHRIFT

(11) **EP 0 671 600 B1**
(45) Veröffentlichungstag und Bekanntmachung des Hinweises auf die Patenterteilung: **11.04.2001**
(21) Anmeldenummer: 95250030.4
(22) Anmeldetag: 07.02.1995
(51) Int. Cl.: G01B 7/30

(54) **Winkelmessvorrichtung**
Device for measuring angles
Dispositif de mesure d'angles

(30) Priorität: 07.03.1994 DE 4408056
(43) Veröffentlichungstag der Anmeldung: 13.09.1995
(73) Patentinhaber: Atecs Mannesmann AG, 40213 Düsseldorf (DE)
(72) Erfinder: Freitag, Holger, D-44388 Bochum (DE)
(74) Vertreter: Presting, Hans-Joachim, Dipl.-Ing.

(56) Entgegenhaltungen:
- FR-A- 2 316 977
- US-A- 3 829 981
- US-A- 4 849 655
- PATENT ABSTRACTS OF JAPAN vol. 016 no. 096 (P-1322) ,10.März 1992 & JP-A-03 274410 (KODEN ELECTRON CO LTD) 5.Dezember 1991,
- PATENT ABSTRACTS OF JAPAN vol. 011 no. 264 (P-610) ,27.August 1987 & JP-A-62 070713 (SHIMADZU CORP) 1.April 1987,
- PATENT ABSTRACTS OF JAPAN vol. 005 no. 126 (P-075) ,14.August 1981 & JP-A-56 065305 (MATSUSHITA ELECTRIC IND CO LTD) 3.Juni 1981,

## Beschreibung

Die Erfindung betrifft eine Winkelmeßvorrichtung gemäß dem Oberbegriff des Anspruchs 1.

Aus der DE-40 32 332 A1 ist eine Meßeinrichtung zur Erfassung des Pendelwinkels eines Seiles einer Hubvorrichtung bekannt. Zwischen der Hubvorrichtung und dem Seil ist die Meßeinrichtung angeordnet, die im wesentlichen aus einem Gelenk kardanischer Art mit rechtwinklig zueinander angeordneten Achsen und die Bewegung der Achsen angreifenden Meßwertaufnehmern besteht. Die Meßwertaufnehmer sind als Drehwinkelgeber ausgebildet und mit ihrer Meßwelle mit der Achse des Gelenkes zur unmittelbaren Aufnahme der Drehbewegung der Achsen verbunden.

Diese Meßeinrichtung erreicht zwar durch die Verwendung von Drehwinkelgebern eine entsprechende Auflösegenauigkeit, jedoch gestaltet sich die Anbindung der Drehwinkelgeber an die Achsen des Kardangelenkes als mechanisch sehr aufwendig. Außerdem benötigen die Drehwinkelgeber einen ausreichenden Bauraum außerhalb des Gelenkes und liefern kein absolutes Meßsignal.

Des weiteren ist aus der DE-OS 17 56 441 eine Pendelausgleichsregelung für eine an einer Laufkatze eines Kranes hängende Last bekannt. Der für die Regelung.benötigte Pendelwinkel wird über induktive Aufnehmer ermittelt, die in Bewegungsrichtung der Katze gesehen vor und hinter dem Seil unter Beibehaltung eines Luftspaltes angeordnet sind. Beim Anfahren und Bremsen der Laufkatze erfolgt durch das Seilpendeln eine Veränderung des Abstandes zwischen dem Seil und den induktiven Aufnehmern. Hierdurch wird eine Spannung in den Aufnehmern induziert, die proportional zu der Auslenkung des Seiles ist.

Diese Vorrichtung zur Ermittlung des Pendelwinkels über induktive Aufnehmer erweist sich als nachteilig, da die Auflösegenauigkeit sehr gering ist und ein räumliches Pendeln des Seils nicht berücksichtigt wird. Darüber hinaus wird ein großer Einbauraum benötigt.

Schließlich ist aus der US-A- 3829981 ein Neigungsmeßgerät zur Bestimmung der Orientierung eines Körpers bekannt, der senkrecht in die Erde gebracht werden soll. Hierbei wird der Neigungswinkel eines Pendels mit Hilfe eines Magneten und eines ihm gegenüber angeordneten Hall-Sensors bestimmt.

Der Erfindung liegt die Aufgabe zugrunde, eine Winkelmeßvorrichtung zu schaffen, die eine kompakte und einfache Bauweise bei gleichzeitig guter Auflösegenauigkeit aufweist.

Diese Aufgabe wird mit den Merkmalen des Anspruchs 1 gelöst. Vorteilhafte Ausgestaltungen der Erfindung sind in den abhängigen Ansprüchen 2 bis 5 angegeben.

Ein Ausführungsbeispiel der Erfindung ist in der Zeichnung dargestellt und wird im folgenden näher beschrieben. Es zeigen:
- Fig. 1: eine Seitenansicht zu Fig. 2 im Schnitt,
- Fig. 2: eine Ansicht zu Fig. 1.

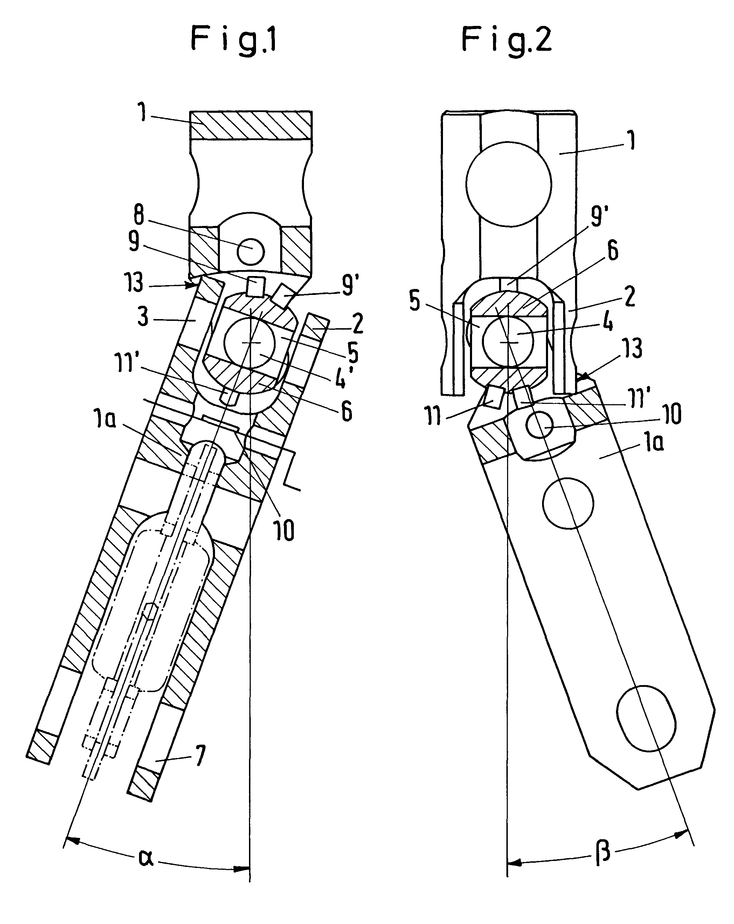

Figur 1 zeigt einen Querschnitt der erfindungsgemäßen Winkelmeßvorrichtung, die über ein kardanisches Gelenk miteinander verbundene Anschlußelemente 1 und 1a aufweist. Die Anschlußelemente 1 und 1a sind jeweils gabelförmig ausgebildet. In den U-förmig gegenüberliegenden Gabelenden 2 ist jeweils eine Bohrung 3 mit einer gemeinsamen Achse vorgesehen. Die Bohrung 3 dient zur Aufnahme einer Achse 4, die rechtwinklig zu einer weiteren Achse 4' angeordnet ist. Die Achsen 4, 4' sind wiederum in korrespondierenden Bohrungen 5 einer Gelenkkugel 6 angeordnet. Dementsprechend sind die Bohrungen 5 der Gelenkkugel 6 rechtwinklig zueinander angeordnet. An dem den Gabelenden 2 abgewandten Ende weisen die Anschlußelemente 1 ösen 7 zur Befestigung der Winkelmeßvorrichtung an nicht dargestellten Bauteilen auf, deren Lage zueinander durch die Winkelmeßvorrichtung bestimmt werden soll. Besonders geeignet ist die Winkelmeßvorrichtung zur Erfassung des Pendelwinkels eines Seiles einer Hubvorrichtung. Hierzu werden die Anschlußelemente 1 und 1a einerseits mit der Hubvorrichtung und andererseits direkt mit dem Seil oder einem zusätzlich gespannten Meßseil verbunden.

Die eigentliche Messung erfolgt durch Hall-Sensoren 8,10 die im Grund der Gabelöffnung der Anschlußelemente 1,1a angeordnet sind. Mit diesen handelsüblichen Hall-Sensoren ist es möglich, die Feldstärke und Richtung eines den Hall-Sensor durchfließenden Magnetfeldes zu bestimmen. Der sog. Hall-Effekt beruht auf der Lorentz-Kraft, die eine orthogonal zu einem Magnetfeld bewegte Ladung seitlich ablenkt. Der Hall-Sensor 8 ist aus einem bandförmigen stromdurchflossenen Leiter aufgebaut. Wird dieser Leiter dem vorbezeichneten Magnetfeld ausgesetzt, so werden die bewegten Elektronen zur Seite abgelenkt. Die Ansammlung der Elektronen an einem Rand des Leiters kann in Form einer sog. Hall-Spannung zwischen den Rändern des Leiters abgegriffen werden. Diese Hall-Spannug ist proportional dem Fluß des Magnetfeldes.

Dementsprechend ist dem Hall-Sensor 8 gegenüberliegend an der Gelenkkugel 6 ein Magnetelement angeordnet. Das Magnetelement ist aufgebaut aus zwei Zylinder-Magneten 9,9', die voneinander beabstandet mit entgegengesetzter Polarität auf der Gelenkkugel 6 angeordnet sind. Die derartig angeordneten Zylinder-Magnete 9,9' bilden zusammen mit der aus ferritischem Werkstoff bestehenden Gelenkkugel 6 einen Hufeisen-Magneten. Das zwischen den beiden Zylinder-Magneten 9, 9' gebildete Luftspaltfeld ist von dem darüber an dem Anschlußelement 1 angeordneten Hall-Sensor 8 erfaßbar. Erfolgt nun eine Auslenkung des unteren Anschlußelementes 1a und somit eine Drehung der Gelenkkugel 6 um die Achse 4, verändert sich die Position der Zylinder-Magnete 9, 9' zu dem Hall-Sensor 8. Hierdurch wird eine Änderung der abgegriffenen Hall-Spannung bewirkt, die nach entsprechender Abgleichung in ein Maß für den Winkel alpha umsetzbar ist. Der Winkel alpha bezeichnet die Auslenkung des unteren Anschlußelementes 1a innerhalb einer rechtwinklig zur Achse 4 angeordneten Ebene.

Die Figur 2 zeigt eine Seitenansicht im Schnitt von Fig. 1. Aus dieser Figur ist ersichtlich, daß zur Erfassung der Winkelbewegung des unteren Anschlußelementes 1a in der senkrecht zu der Achse 4' liegenden Ebene ein weiteres Paar Zylinder-Magnete 11, 11' an der Gelenkkugel 6 angeordnet ist. Zur Aufnahme der Winkelbewegung der Zylinder-Magnete 11, 11' ist wiederum ein Hall-Sensor 10 an dem Anschlußelement 1a angeordnet.

Die Gabelenden 2 stehen in den Anschlußelementen 1, 1a bei 13 so weit vor, daß eine Schwenkwinkelbegrenzung erzielt wird. Die Schwenkwinkel alpha und beta betragen maximal praktisch etwa 20 Grad.

Die Hall-Sensoren 8 und 10 sind in einer vorwählbaren Null-Lage zwischen den beiden Anschlußelementen 1 und 1a mittig zu den Zylinder-Magneten 9 und 9' bzw. 11 und 11' ausgerichtet.

### Bezugszeichenliste

- 1: Anschlußelement
- 1a: Anschlußelement
- 2: Gabelende
- 3: Bohrung
- 4,4': Achse
- 5: Bohrung
- 6: Gelenkkugel
- 7: Öse
- 8: Hall-Sensor
- 9,9': Zylinder-Magnete
- 10: Hall-Sensor
- 11,11': Zylinder-Magnete
- 13: vorstehende Gabelenden

- alpha: Schwenkwinkel
- beta: Schwenkwinkel

## Patentansprüche

1. Winkelmeßvorrichtung, insbesondere zur Pendelwinkelmessung eines Seiles einer Hebeeinrichtung, mit einem kardanischen Gelenk mit einer aus einem ferritischen Werkstoff hergestellten Gelenkkugel (6), mit zwei Anschlußelementen (1, 1a), die mit zwei rechtwinklig zueinander in der Gelenkkugel (6) angeordneten Achsen (4, 4') verbunden sind, mit zwei Hall-Sensoren (8, 10), die an den Anschlußelementen (1, 1a) angeordnet sind, und mit zwei den Hall-Sensoren (8, 10) jeweils gegenüberliegend angeordneten Magnetelementen (9, 9', 11, 11'), wobei jedes Magnetelement aus zwei Magneten (9,9' bzw. 11,11') aufgebaut ist, die voneinander beabstandet mit entgegengesetzter Polarität quer zur zugehörigen Achse (4, 4'). in der Gelenkkugel (6) angeordnet sind.

2. Winkelmeßvorrichtung nach Anspruch 1,
dadurch gekennzeichnet,
daß das Magnetelement (9,9' bzw. 11, 11') ein gerichtetes Luftspaltfeld bildet.

3. Winkelmeßvorrichtung nach einem der Ansprüche 1 oder 2,
dadurch gekennzeichnet,
daß die Anschlußelemente (1, 1a) einseitig U-förmig ausgebildete Gabelenden (2) aufweisen, die jeweils mit gegenüberliegenden Bohrungen (3) versehen sind, in denen die Achsen (4,4') eingeschoben sind, die mit ihren freien Enden in weiteren Bohrungen (5) einer Gelenkkugel (6) angeordnet sind.

4. Winkelmeßvorrichtung nach Anspruch 1,
dadurch gekennzeichnet,
daß die Magnetelemente (9,9' bzw. 11, 11') zwei Zylinder -Magnete aufweisen.

5. Winkelmeßvorrichtung nach einem der Ansprüche 1 bis 4,
dadurch gekennzeichnet,
daß der Hall-Sensor(8 bzw. 10) in einer vorwählbaren Null-Lage zwischen den beiden Anschlußelementen (1, 1a) mittig zu den Zylinder-Magneten ausgerichtet ist.

## Claims

1. Angle measuring device, in particular for measuring the pendulum angle of a rope of a lifting appliance, with a Cardan joint having a joint ball (6) made of a ferritic material, with two connection elements (1, 1a), which are connected to two pins (4, 4') disposed at a right angle to one another in the joint ball (6), with two Hall sensors (8, 10), which are disposed at the connection elements (1, 1a), and with two magnetic elements (9, 9', 11, 11'), which are each disposed opposite the Hall sensors (8, 10), wherein each magnetic element consists of two magnets (9, 9' and 11, 11', respectively), which are disposed at a spacing from one another with opposite polarity transversely to the associated pin (4, 4') in the joint ball (6).

2. Angle measuring device according to Claim 1,
characterised in that the magnetic element (9, 9' and 11, 11', respectively) forms a directional air-gap field.

3. Angle measuring device according to either of Claims 1 and 2,
characterised in that the connection elements comprise U-shaped fork ends (2) on one side, each of which ends is provided with opposite holes (3) in which the pins (4, 4') are inserted, which pins are disposed with their free ends in further holes (5) in a joint ball (5).

4. Angle measuring device according to Claim 1,
characterised in that the magnetic elements (9, 9' and 11, 11', respectively) comprise two cylindrical magnets.

5. Angle measuring device according to any one of Claims 1 to 4,
characterised in that the Hall sensor (8 and 10, respectively) is oriented centrally relative to the cylindrical magnets in a preselectable zero position between the two connection elements (1, 1a).

## Revendications

1. Dispositif de mesure angulaire, en particulier pour mesurer l'angle d'oscillation d'un câble d'un dispositif de levage, comportant une articulation à la Cardan, ayant une rotule (6) fabriquée en une matière ferritique, deux éléments de raccordement (1,1a), qui sont reliés à deux axes (4,4') agencés à angle droit l'un par rapport à l'autre dans la rotule (6), deux capteurs Hall (8,10), qui sont agencés sur les éléments de raccordement (1,1a), et deux éléments magnétiques (9,9',11,11') agencés, à chaque fois, de façon opposée aux capteurs Hall (8,10), chaque élément magnétique étant réalisé à partir de deux aimants (9,9' ou 11,11') qui sont agencés de façon espacée l'un de l'autre, avec des polarités opposées, transversalement à l'axe correspondant (4,4') dans la rotule (6).

2. Dispositif de mesure angulaire selon la revendication 1,
caractérisé en ce que l'élément magnétique (9,9' ou 11,11') forme un champ d'entrefer orienté.

3. Dispositif de mesure angulaire selon l'une des revendications 1 ou 2,
caractérisé en ce que les éléments de raccordement (1,1a) présentent des extrémités en forme de fourche (2) réalisées de façon unilatérale en forme de U qui sont munies, à chaque fois, de perçages opposés (3) dans lesquels les axes (4,4') sont introduits, qui, par leurs extrémités libres, sont agencés dans d'autres perçages (5) d'une rotule (6).

4. Dispositif de mesure angulaire selon la revendication 1,
caractérisé en ce que les éléments magnétiques (9,9' ou 11,11') présentent deux aimants cylindriques.

5. Dispositif de mesure angulaire selon l'une des revendications 1 à 4,
caractérisé en ce que le capteur Hall (8 ou 10), dans une position de référence pouvant être préchoisie, est orienté entre les deux éléments de raccordement (1,1a) de façon centrale par rapport aux aimants cylindriques.
